# EUROPEAN PATENT APPLICATION

(11) **EP 4 814 346 A1**
(43) Date of publication of application: **30.09.2026**
(21) Application number: 26165653.2
(22) Date of filing: 18.03.2026
(51) Int. Cl.: F16K 1/12, F15B 13/044, F16K 31/04, F16K 31/53

(54) **DUAL-VALVE-CORE SERVO VALVE**

(30) Priority: 24.03.2025 CN 202510345557
(71) Applicant: Ningbo LK Technology Co., Ltd., Ningbo City, Zhejiang Province 315000 (CN)
(72) Inventor: FENG, Guangming, Ningbo, 315000 (CN); LV, Anqing, Ningbo, 315000 (CN); ZHANG, Jun, Ningbo, 315000 (CN); LIU, Zhuoming, Ningbo, 315000 (CN); ZHANG, Ruiting, Ningbo, 315000 (CN); WANG, Yunxiang, Ningbo, 315000 (CN); REN, Mingyuan, Ningbo, 315000 (CN); HU, Jiangpin, Ningbo, 315000 (CN)
(74) Representative: Miller, Ronald Anthony

(57) **Abstract**

Disclosed is a dual-valve-core servo valve, including a first valve seat, a second valve seat, an inner valve core, a first drive assembly, and a second drive assembly; the inner valve core is sealingly and slidably mounted on the first valve seat to form a small-opening-degree servo valve, and the first drive assembly drives the inner valve core to move along the first valve seat to perform opening degree adjustment; and the first valve seat is sealingly and slidably mounted on the second valve seat, such that the first valve seat as a valve core cooperates with the second valve seat to form a large-opening-degree servo valve, and the second drive assembly drives the entire small-opening-degree servo valve to move along the second valve seat to perform opening degree adjustment. Through a two-stage valve core structure, precise control of different flow rates according to different application scenarios is achieved.

## Description

### TECHNICAL FIELD

The present invention relates to the technical field of valves, and in particular to a dual-valve-core servo valve.

### BACKGROUND

A servo valve is a control element commonly used in a hydraulic system, and achieves flow control, pressure control, direction control, and automatic regulation of the hydraulic system. Taking pressure control as an example, the servo valve performs opening degree adjustment of a valve port by moving its own valve core to achieve pressure control.

Under the condition of constant pressure, movement of the valve core of the servo valve is controlled mainly through two modes. One is a linear gain mode, that is, an opening degree of the valve port is linearly proportional to displacement of the valve core; and the other is a nonlinear mode, that is, the opening degree of the valve port relates to the displacement of the valve core in a multi-power relationship. For the above two control modes, under the condition of a same nominal diameter, the nonlinear mode has higher flow regulation accuracy at a small opening degree than the linear mode, but has lower flow regulation accuracy at a large opening degree than the linear mode. Therefore, a plurality of servo valves of different modes typically need to be arranged for a hydraulic system in the prior art to meet different opening degree requirements, thereby leading to complexity of an overall connection structure of the hydraulic system, and a relatively high cost.

### SUMMARY

An objective of the present invention is to provide a dual-valve-core servo valve that overcomes at least one of the defects mentioned in the Background.

To achieve at least one of the above objectives, the technical solution adopted in the present invention is as follows: A dual-valve-core servo valve, includes a first valve seat, a second valve seat, an inner valve core, a first drive assembly, and a second drive assembly; the inner valve core is sealingly and slidably mounted on the first valve seat to form a small-opening-degree servo valve, and the first drive assembly drives the inner valve core to move along the first valve seat to perform opening degree adjustment; and the first valve seat is sealingly and slidably mounted on the second valve seat, such that the first valve seat as a valve core cooperates with the second valve seat to form a large-opening-degree servo valve, and the second drive assembly drives the entire small-opening-degree servo valve to move along the second valve seat to perform opening degree adjustment.

Preferably, the first drive assembly includes a first drive device and a first traction member; the first drive device is fixedly mounted outside the second valve seat, a first end of the first traction member is in driving engagement with the first drive device, and a second end of the first traction member passes through the second valve seat and is connected to the inner valve core in the first valve seat; and the first traction member, driven by the first drive device, drives the inner valve core to move along the first valve seat.

Preferably, the first drive device is a motor, and the inner valve core has a non-circular cross-section or is in rotational limiting engagement with the first valve seat; the first traction member includes a first transmission member and a first drive rod; the first transmission member is rotatably mounted on the first valve seat, a first end of the first transmission member is in transmission engagement with the first drive device, and a second end of the first transmission member engages with the first drive rod through a first thread or a first lead screw; and an end of the first drive rod away from the first transmission member is fixedly connected to the inner valve core.

Preferably, the first transmission member includes a first rotating sleeve and a first transmission shaft; the first rotating sleeve is rotatably mounted on the first valve seat and engages with the first drive rod through a second thread or a second lead screw; and a first end of the first transmission shaft is fixedly connected to the first rotating sleeve, and a second end of the first transmission shaft is in transmission engagement with the first drive device.

Preferably, an output end of the first drive device is in spline transmission engagement with the first transmission member; or the output end of the first drive device engages with a second gear disposed on the first transmission member through a first gear, and a width difference between the first gear and the second gear is greater than or equal to an opening degree stroke of the large-opening-degree servo valve.

Preferably, the second drive assembly includes a second drive device and a second traction member; the second drive device is fixedly mounted outside the second valve seat, the second traction member is sleeved on the first traction member, a first end of the second traction member is in driving engagement with the second drive device, and a second end of the second traction member is disposed in the second valve seat and connected to the first valve seat; and the second traction member, driven by the second drive device, drives the small-opening-degree servo valve to move.

Preferably, the second drive device is a motor, and the first valve seat has a non-circular cross-section or is in rotational limiting engagement with the second valve seat; the second traction member includes a second transmission member and a second drive rod; the second transmission member is rotatably mounted on the second valve seat, a first end of the second transmission member is in transmission engagement with the second drive device, and a second end of the second transmission member engages with the second drive rod through a first thread or a first lead screw; and an end of the second drive rod away from the second transmission member is fixedly connected to the first valve seat.

Preferably, the second transmission member includes a second rotating sleeve and a second transmission shaft; the second rotating sleeve is rotatably mounted on the second valve seat and engages with the second drive rod through a second thread or a second lead screw; and a first end of the second transmission shaft is fixedly connected to the second rotating sleeve, and a second end of the second transmission shaft is in gear transmission engagement with the second drive device.

Preferably, the inner valve core is sealingly and slidably mounted in a first inner cavity of the first valve seat, and the first valve seat is sealingly and slidably mounted in a second inner cavity of the second valve seat; and an oil passage communicating with an oil inlet of the first valve seat and the first inner cavity is disposed in the inner valve core; and a first oil port communicating with the second inner cavity is disposed on a side portion of the first inner cavity of the first valve seat.

Preferably, the oil inlet of the first valve seat engages with the inner valve core through a first conical surface, and an oil inlet of the second valve seat also engages with the first valve seat through a second conical surface.

Compared with the prior art, the present invention has the following beneficial effects.

A two-stage valve core structure is integrated to form the small-opening-degree servo valve structure and the large-opening-degree servo valve structure that do not interfere with each other, so as to achieve precise control of different flow rates according to different application scenarios.

### BRIEF DESCRIPTION OF THE DRAWINGS

FIG. 1 is a schematic diagram of an overall structure of the present invention.
FIG. 2 is a schematic diagram of a partial structure of a small-opening-degree servo valve activated of the present invention.
FIG. 3 is a schematic diagram of a partial structure of a large-opening-degree servo valve activated of the present invention.

Reference numerals in the drawings: 1-first valve seat, 10-first valve port, 11-first oil port, 12-first inner cavity, 2-inner valve core, 20-second oil port, 21-third oil port, 3-second valve seat, 30-second valve port, 31-second inner cavity, 4-first drive assembly, 41-first drive device, 411-first gear, 42-first transmission shaft, 421-second gear, 43-first rotating sleeve, 44-first drive rod, 5-second drive assembly, 51-second drive device, 511-third gear, 52-second transmission shaft, 521-fourth gear, 53-second rotating sleeve, 54-second drive rod, and 6-mounting cover.

### DETAILED DESCRIPTION OF THE EMBODIMENTS

The present invention will be further described below with reference to specific embodiments. It is to be noted that, in the description of the present specification, the description of reference terms such as "one embodiment", "some embodiments", "example", "specific example" or "some examples" means that specific features, structures, materials or characteristics described in combination with the embodiment or example are included in at least one embodiment or example of the present invention. In the present description, the schematic description of the above terms should not be construed as necessarily referring to the same embodiment or example. Moreover, the specific features, structures, materials or characteristics described may be combined in a suitable manner in any one or more examples or embodiments. Further, those skilled in the art may integrate and combine different examples or embodiments described in the present specification.

In the description of the present invention, it should be noted that orientation or position relationships indicted by terms such as "central", "longitudinal", "transverse", "length", "width", "thickness", "upper", "lower", "front", "rear", "left", "right", "vertical", "horizontal", "top", "bottom", "inner", "outer", "clockwise", "counterclockwise" and the like indicate azimuthal or positional relations based on those shown in the accompanying drawings only for ease of description of the present invention and for simplicity of description, and are not intended to indicate or imply that the referenced device or element must have a particular orientation and be constructed and operative in a particular orientation, and thus may not be interpreted as a limitation on the protection scope of the present invention.

It is to be noted that the terms "first", "second" and the like in the specification and the claims are used to distinguish similar objects and are not necessarily intended to indicate a specific order or sequence.

In the present invention, it is to be noted that, unless otherwise explicitly specified and defined, the terms "mounting", "connected", "connecting", "fixing", etc. are to be understood in a broad sense. For example, the connection may be a fixed connection, a detachable connection or an integral connection; may be a mechanical connection or an electrical connection; may be a direct connection or an indirect connection by using an intermediate medium; or may be intercommunication between two components, or an interactive relation between two elements. The specific meanings of the above terms in the present invention may be understood on a case-by-case basis for those of ordinary skill in the art.

In the present invention, unless otherwise expressly stated and defined, a first feature being "above" or "below" a second feature may include the first and second features being in direct contact or that the first and second features being not in direct contact but being in contact by means of additional features between the first and second features. In addition, the first feature being "over", "above" and "on the top of" the second feature includes that the first feature is over and above the second feature, or simply means that the level of the first feature is higher than that of the second feature. The first feature being "under", "below" and "at the bottom of" the second feature includes that the first feature is under and below the second feature, or simply means that the level of the first feature is lower than that of the second feature.

The terms in the specification and the claims of the present invention such as "including" and "having" and any variations thereof are intended to cover non-exclusive inclusion. For example, the process, method, system product or apparatus that includes a series of steps or units does not necessarily include only those steps or units listed explicitly, but may include other steps or units that are not explicitly listed or are inherent to the process, method, product or apparatus.

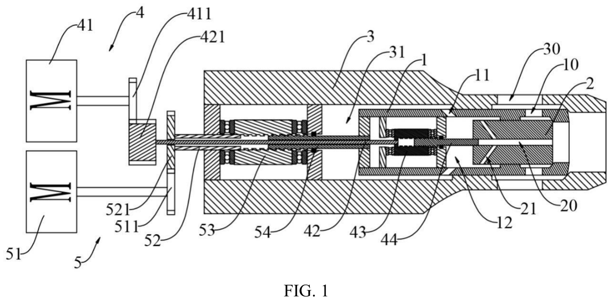

In a preferred embodiment of the present invention, as shown in FIG. 1, a dual-valve-core servo valve includes a first valve seat 1, a second valve seat 3, an inner valve core 2, a first drive assembly 4, and a second drive assembly 5. The inner valve core 2 is sealingly and slidably mounted on the first valve seat 1 to form a small-opening-degree servo valve, such that the inner valve core 2 adjusts an opening degree of a first valve port 10 on the first valve seat 1 by moving along the first valve seat 1. The first drive assembly 4 may be mounted on the second valve seat 3 or externally mounted at any other position, as long as the first drive assembly 4 operates and drives stably; and the first drive assembly 4 may be in driving cooperation with the inner valve core 2, such that the inner valve core 2, driven by the first drive assembly 4, moves along the first valve seat 1 to perform opening degree adjustment. The first valve seat 1 is sealingly and slidably mounted on the second valve seat 3, such that the first valve seat 1 as a valve core cooperates with the second valve seat 3 to form a large-opening-degree servo valve, and opening degree adjustment of a second valve port 30 on the second valve seat 3 is implemented in a way that the first valve seat 1 moves along the second valve seat 3. The second drive assembly 5 may be mounted on the second valve seat 3 or externally mounted at any other position, as long as the second drive assembly 5 operates and drives stably; and second drive assembly 5 may be in driving cooperation with the first valve seat 1, such that the first valve seat 1, driven by the second drive assembly 5, moves along the second valve seat 3 to perform opening degree adjustment.

Compared with a conventional method, the present invention integrates a two-stage valve core structure to form a small-opening-degree servo valve structure and a large-opening-degree servo valve structure that do not interfere with each other, so as to achieve precise control of different flow rates according to different application scenarios. Additionally, the small-opening-degree servo valve is used as a valve core of the large-opening-degree servo valve to effectively reduce the number of parts of the servo valve, thereby saving the cost and reducing an installation space for the servo valve.

It can be understood that, as shown in FIG. 1 to FIG. 3, oil inlets of the first valve seat 1 and the second valve seat 3 are located on a same side, the first valve port 10 of the first valve seat 1 and the second valve port 30 of the second valve seat 3 communicate with each other, and an opening degree size of the first valve port 10 is smaller than an opening degree size of the second valve port 30.

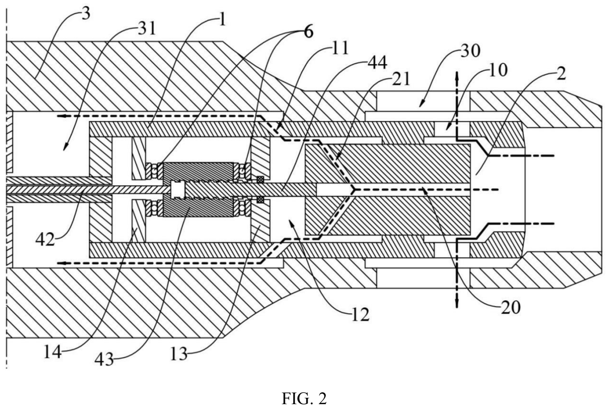

To perform nonlinear opening degree control in a small-opening-degree scenario, a port of the first valve seat 1 and an oil inlet of the second valve seat 3 need to be in a sealed state; in this case, the inner valve core 2, driven by the first drive assembly 4, sealingly slides along a first inner cavity 12 of the first valve seat 1 to open the first valve port 10, such that oil enters from an oil inlet of the first valve seat 1, and then passes through the opened first valve port 10 and finally flows out from the second valve port 30; and a specific flow path is shown by the dot-dash line in FIG. 2.

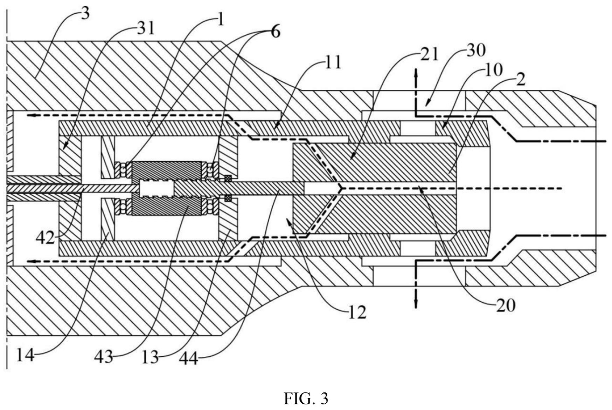

To perform linear opening degree control in a large-opening-degree scenario, the port of the first valve seat 1 and the oil inlet of the second valve seat 3 may be in the sealed state or directly in an opened state, as long as the inner valve core 2 and the first valve seat 1 remain relatively stationary during the subsequent opening degree adjustment process; and for the convenience of description, the following description will be given by taking an example where the port of the first valve seat 1 and the oil inlet of the second valve seat 3 are in the sealed state. Then the first valve seat 1, driven by the second drive assembly 5, sealingly slides along a second inner cavity 31 of the second valve seat 3 to open the second valve port 30, such that oil enters from the oil inlet of the second valve seat 3 and then flows out from the opened second valve port 30; and a specific flow path is shown by the dot-dash line in FIG. 3. It should be noted that the inner valve core 2 needs to move synchronously with the first valve seat 1 during movement of the first valve seat 1.

It should be known that, to ensure the stable sealing between the inner valve core 2 and the oil inlet of the first valve seat 1 and between the first valve seat 1 and the oil inlet of the second valve seat 3, the oil inlet of the first valve seat 1 may engage with a port of the inner valve core 2 through a conical surface, and the oil inlet of the second valve seat 3 may also engage with the port of the first valve seat 1 through a conical surface.

In this embodiment, as shown in FIG. 1, the first drive assembly 4 includes a first drive device 41 and a first traction member, where the first drive device 41 is fixedly mounted outside the second valve seat 3, a first end of the first traction member is in driving engagement with an output end of the first drive device 41, and a second end of the first traction member may pass through the second valve seat 3 and be connected to the inner valve core 2 in the first valve seat 1. To perform the opening degree adjustment of the small-opening-degree servo valve, the first drive device 41 may be activated, such that the first traction member, driven by the first drive device 41, drives the inner valve core 2 to move along the first valve seat 1.

It can be understood that the first traction member drives the inner valve core 2 to perform linear motion, the first drive device 41 drives the first traction member to achieve the linear motion of the inner valve core 2 through various specific driving modes, and for example, the first drive device 41 may directly drive the first traction member to move linearly to drive the inner valve core 2 to move synchronously; and for another example, the first drive device 41 drives the first traction member to rotate, and then the linear motion of the inner valve core 2 is achieved through a transmission structure such as a lead screw or a thread.

It should be known that when the first drive device 41 directly drives the first traction member to perform linear motion, a common structure of the first drive device 41 is an air cylinder or a hydraulic cylinder, resulting in that an additional air source or an oil source is required for the first drive device 41. Additionally, both the air cylinder and the hydraulic cylinder are prone to leakage, and the leakage of the air cylinder or the hydraulic cylinder reduces the opening degree control accuracy of the small-opening-degree servo valve. Therefore, in this embodiment, the first drive device 41 rotatably drives the first traction member to achieve the movement of the inner valve core 2, that is, the first drive device 41 is preferably a motor, and precise opening degree control of the small-opening-degree servo valve is achieved through servo control of the motor.

Specifically, as shown in FIG. 1 and FIG. 2, the inner valve core 2 has a non-circular cross-section or is in rotational limiting engagement with the first valve seat 1, to facilitate stable linear motion of the inner valve core 2 subsequently. The first traction member includes a first transmission member and a first drive rod 44, where the first transmission member is rotatably mounted on the first valve seat 1, a first end of the first transmission member is in transmission engagement with the first drive device 41, and a second end of the first transmission member engages with the first drive rod 44 through a thread or a lead screw. An end of the first drive rod 44 away from the first transmission member is fixedly connected to the inner valve core 2.

To perform the opening degree control of the small-opening-degree servo valve, the first drive device 41 is activated, such that the first transmission member is driven by the first drive device 41 to rotate; since the first transmission member rotate only around the first valve seat 1 and cannot move axially, engagement between the first transmission member and the first drive rod 44 through a thread or a lead screw causes the first drive rod 44 to drive the inner valve core 2 to move axially. A nonlinear mode of the inner valve core 2 may be implemented by non-constant control of a rotational speed of the first drive device 41.

It should be known that, taking threaded engagement between the first transmission member and the first drive rod 44 as an example, the first transmission member may be inserted into the first drive rod 44 for threaded engagement, or the first drive rod 44 may be inserted into the first transmission member for threaded engagement. The first transmission member and the first drive rod 44 are installed through various specific methods, and for the convenience of understanding, a detailed description will be given below by taking one of installation methods as an example.

Specifically, as shown in FIG. 1 to FIG. 3, the first transmission member includes a first rotating sleeve 43 and a first transmission shaft 42. A pair of mounting covers 6 are arranged at intervals on an inner side of the first valve seat 1 in a length direction, and the mounting covers 6 may be fixedly connected to the first valve seat 1 by welding or bolting, such that a rotational installation space may be formed between the two mounting covers 6. The first rotating sleeve 43 is located in the rotational installation space and cooperates with the two mounting covers 6 through thrust bearings at both ends, of the first rotating sleeve such that the first rotating sleeve 43 is rotatably mounted on the first valve seat 1. The first transmission shaft 42 is fixedly connected to one end of the first rotating sleeve 43 away from the inner valve core 2, and a second end of the first transmission shaft 42 extends through the second valve seat 3 for transmission engagement with the first drive device 41. The first drive rod 44 may engage with the first rotating sleeve 43 through a thread or a lead screw, such that when the first drive device 41 is activated, the first transmission shaft 42 may drive the first rotating sleeve 43 to rotate synchronously, and thus the first rotating sleeve 43 drives the inner valve core 2 to move through engagement with the first drive rod 44 through a thread or a lead screw.

It should be known that as previously mentioned, when the large-opening-degree servo valve is activated, the entire small-opening-degree servo valve moves along the second valve seat 3, and since the first transmission shaft 42 is fixedly connected to the first rotating sleeve 43, the first transmission shaft 42 moves synchronously with the small-opening-degree servo valve. To ensure stable connection between the first drive device 41 and the first transmission shaft 42, the first drive device 41 is arranged in a floating manner, that is, the first drive device 41 moves axially synchronously with the first transmission shaft 42; or a floating structure is arranged between the output end of the first drive device 41 and the first transmission shaft 42, such that the first transmission shaft 42 moves axially relative to the first drive device 41 while maintaining stable transmission connection with the first drive device 41. In view of practical actual application scenarios, floating arrangement of the first drive device 41 maybe does not adapt to some application scenarios, so in this embodiment, a floating structure is preferably arranged between the output end of the first drive device 41 and the first transmission shaft 42. A specific configuration of the floating structure varies depending on different specific installation positions of the first drive device 41 and the first transmission shaft 42, and for ease of understanding, a detailed description will be given below by taking two specific examples.

Example 1: The output end of the first drive device 41 is collinear with an axis of the first transmission shaft 42; and the output end of the first drive device 41 may be in spline transmission engagement with the first transmission shaft 42 to form a floating structure.

Example 2: As shown in FIG. 1, the output end of the first drive device 41 is not collinear with the axis of the first transmission shaft 42; the output end of the first drive device 41 engages with a second gear 421 disposed on the first transmission shaft 42 through a first gear 411, a width difference exists between the first gear 411 and the second gear 421, and the width difference is greater than or equal to an opening degree stroke of the large-opening-degree servo valve. Specifically, a width of the first gear 411 may be greater than a width of the second gear 421, or the width of the second gear 421 may be greater than the width of the first gear 411, depending on specific actual needs of those skilled in the art.

In this embodiment, as shown in FIG. 1, the second drive assembly 5 includes a second drive device 51 and a second traction member; the second drive device 51 is fixedly mounted outside the second valve seat 3, and the second traction member is sleeved on the first traction member, that is, the first traction member and the second traction member are in smooth contact or non-contact with each other; and a first end of the second traction member is in driving engagement with the second drive device 51, and a second end of the second traction member is disposed in the second valve seat 3 and connected to the first valve seat 1. To perform the opening degree adjustment of the large-opening-degree servo valve, the second drive device 51 may be activated, such that the second traction member, driven by the second drive device 51, drives the entire small-opening-degree servo valve to move along the second valve seat 3.

It can be understood that the second traction member drives the small-opening-degree servo valve to perform linear motion, the second drive device 51 drives the second traction member to achieve the linear motion of the small-opening-degree servo valve through various specific driving modes, and for example, the second drive device 51 may directly drive the second traction member to move linearly to drive the small-opening-degree servo valve to move synchronously; and for another example, the second drive device 51 drives the second traction member to rotate, and then the linear motion of the small-opening-degree servo valve is achieved through a transmission structure such as a lead screw or a thread.

It should be known that when the second drive device 51 directly drives the second traction member to perform linear motion, a common structure of the second drive device 51 is an air cylinder or a hydraulic cylinder, resulting in that an additional air source or an oil source is required for the second drive device 51. Additionally, both the air cylinder and the hydraulic cylinder are prone to leakage, and the leakage of the air cylinder or the hydraulic cylinder reduces the opening degree control accuracy of the large-opening-degree servo valve. Therefore, in this embodiment, the second drive device 51 rotatably drives the second traction member to achieve the movement of the small-opening-degree servo valve, that is, the second drive device 51 is preferably a motor, and precise opening degree control of the small-opening-degree servo valve is achieved through servo control of the motor.

Specifically, as shown in FIG. 1 to FIG. 3, the first valve seat 1 has a non-circular cross-section or is in rotational limiting engagement with the second valve seat 3, to facilitate stable linear motion of the first valve seat 1 subsequently. The second traction member includes a second transmission member and a second drive rod 54, where the second transmission member is rotatably mounted on the second valve seat 3, a first end of the second transmission member is in transmission engagement with the second drive device 51, and a second end of the second transmission member engages with the second drive rod 54 through a thread or a lead screw; and an end of the second drive rod 54 away from the second transmission member is fixedly connected to the first valve seat 1.

To perform the opening degree control of the large-opening-degree servo valve, the second drive device 51 is activated, such that the second transmission member is driven by the second drive device 51 to rotate; since the second transmission member rotates only around the second valve seat 3 and cannot move axially, engagement between the second transmission member and the second drive rod 54 through a thread or a lead screw causes the second drive rod 54 to drive the first valve seat 1 to move axially. A linear operation mode of the small-opening-degree servo valve may be implemented by constant control of a rotational speed of the second drive device 51.

It should be known that, taking threaded engagement between the second transmission member and the second drive rod 54 as an example, the second transmission member may be inserted into the second drive rod 54 for threaded engagement, or the second drive rod 54 may be inserted into the second transmission member for threaded engagement. The second transmission member and the second drive rod 54 are installed through various specific methods, and for the convenience of understanding, a detailed description will be given below by taking one of structures as an example.

Specifically, as shown in FIG. 1 to FIG. 3, the second transmission member includes a second rotating sleeve 53 and a second transmission shaft 52. A rotational installation position of the second rotating sleeve 53 is located in the second valve seat 3, and a specific installation method of the second rotating sleeve is basically the same as that of the first rotating sleeve 43, which will not be described in detail herein. The second transmission shaft 52 is fixedly connected to one end of the second rotating sleeve 53 away from the small-opening-degree servo valve, and a second end of the second transmission shaft 52 extends through the second valve seat 3 and engages with a third gear 511 at the output end of the second drive device 51 through a fixedly mounted fourth gear 521. The second drive rod 54 may engage with the second rotating sleeve 53 through a thread or a lead screw, such that when the second drive device 51 is activated, the second transmission shaft 52 may drive the second rotating sleeve 53 to rotate synchronously, and thus the second rotating sleeve 53 drives the small-opening-degree servo valve to move through engagement with the second drive rod 54 through a thread or a lead screw.

It should be noted that, to ensure that the large-opening-degree servo valve and the small-opening-degree servo valve do not interfere with each other, through holes are formed in centers of the second transmission shaft 52 and the second drive rod 54, such that the first transmission shaft 42 extends into the first valve seat 1 along the through holes in the centers of the second transmission shaft 52 and the second drive rod 54 to be connected to the inner valve core 2. A diameter of the first transmission shaft 42 is smaller than an inner diameter of the through holes in the centers of the second transmission shaft 52 and the second drive rod 54.

In this embodiment, as shown in FIG. 1 to FIG. 3, the inner valve core 2 is sealingly and slidably mounted in the first inner cavity 12 of the first valve seat 1, and the first valve seat 1 is sealingly and slidably mounted in the second inner cavity 31 of the second valve seat 3. An oil passage communicating with the oil inlet of the first valve seat 1 and the first inner cavity 12 is disposed in the inner valve core 2. A first oil port 11 communicating with the second inner cavity 31 is disposed on a side portion of the first inner cavity 12 of the first valve seat 1. The arrangement of the oil passage and the first oil port 11 maintains a pressure balance at both ends of the valve core during operation of the small-opening-degree servo valve and the large-opening-degree servo valve, thereby reducing a resistance when the opening degree of the valve core is reduced.

Specifically, as shown in FIG. 1 to FIG. 3, a second oil port 20 and a third oil port 21 are disposed in the inner valve core 2, where the second oil port 20 is located at a center of the inner valve core 2 and one end of the second oil port communicates with the oil inlet of the first valve seat 1, a plurality of third oil ports 21 may be arranged and uniformly distributed in a circumferential direction of the inner valve core 2, one end of the third oil port 21 communicates with the first inner cavity 12 of the first valve seat 1, and the other end of the third oil port communicates with the second oil port 20.

It can be understood that, taking the small-opening-degree servo valve as an example, when the inner valve core 2 needs to move in a direction of opening degree increasing, the inner valve core 2, under the action of oil pressure, moves in a direction away from the oil inlet of the first valve seat 1. When no oil passage is arranged and when the inner valve core 2 needs to move in a direction of opening degree decreasing, oil supply pressure of the oil inlet remains unchanged, and the oil at the oil inlet is squeezed during motion of the inner valve core 2, such that pressure at the oil inlet increases, and the actuation resistance of the inner valve core 2 increases. After the oil passage is arranged on the inner valve core 2, before motion of the inner valve core 2, the oil at the oil inlet of the first valve seat 1 flows into the first inner cavity 12 and the second inner cavity 31 along the oil passage, such that the pressure at both ends of the inner valve core 2 tends to be balanced. Therefore, when the inner valve core 2 needs to perform motion with a decreased opening degree, an oil storage space of the first inner cavity 12 increases with the movement of the inner valve core 2, and then part of the oil at the oil inlet of the first valve seat 1 flows into the first inner cavity 12 along the oil passage, thereby greatly reducing the actuation resistance of the inner valve core 2, ensuring smooth opening degree control of the inner valve core 2, and further improving the opening degree control accuracy. A specific oil flow direction for maintaining the pressure balance at both ends of the valve core is illustrated by the dashed lines in FIG. 2 and FIG. 3.

The basic principles, main features and advantages of the present invention are described above. It should be understood by those skilled in the art that the present invention is not limited by the foregoing examples, the descriptions in the foregoing examples and the specification are merely illustrative of the principles of the present invention, various changes and improvements will be made in the present invention without departing from the spirit and scope of the present invention, and all these changes and improvements fall within the scope of the present invention. The scope requiring protection of the present invention is defined by the appended claims and equivalents thereof.

## Claims

1. A dual-valve-core servo valve, **characterized by** comprising:
a first valve seat;
an inner valve core, wherein the inner valve core is sealingly and slidably mounted on the first valve seat to form a small-opening-degree servo valve;
a first drive assembly, wherein the first drive assembly drives the inner valve core to move along the first valve seat to perform opening degree adjustment;
a second valve seat, wherein the first valve seat is sealingly and slidably mounted on the second valve seat, such that the first valve seat as a valve core cooperates with the second valve seat to form a large-opening-degree servo valve; and
a second drive assembly, wherein the second drive assembly drives the small-opening-degree servo valve to move along the second valve seat to perform opening degree adjustment.

2. The dual-valve-core servo valve according to claim 1, **characterized in that** the first drive assembly comprises:
a first drive device, wherein the first drive device is fixedly mounted outside the second valve seat; and
a first traction member, wherein a first end of the first traction member is in driving engagement with the first drive device, and a second end of the first traction member passes through the second valve seat and is connected to the inner valve core in the first valve seat; and the first traction member, driven by the first drive device, drives the inner valve core to move along the first valve seat.

3. The dual-valve-core servo valve according to claim 2, **characterized in that** the first drive device is a motor, and the inner valve core has a non-circular cross-section or is in rotational limiting engagement with the first valve seat;
the first traction member comprises:
a first transmission member, wherein the first transmission member is rotatably mounted on the first valve seat, and a first end of the first transmission member is in transmission engagement with the first drive device; and
a first drive rod, wherein a second end of the first transmission member engages with the first drive rod through a first thread or a first lead screw; and an end of the first drive rod away from the first transmission member is fixedly connected to the inner valve core.

4. The dual-valve-core servo valve according to claim 3, **characterized in that** the first transmission member comprises:
a first rotating sleeve, wherein the first rotating sleeve is rotatably mounted on the first valve seat and engages with the first drive rod through a second thread or a second lead screw; and
a first transmission shaft, wherein a first end of the first transmission shaft is fixedly connected to the first rotating sleeve, and a second end of the first transmission shaft is in transmission engagement with the first drive device.

5. The dual-valve-core servo valve according to claim 3, **characterized in that** an output end of the first drive device is in spline transmission engagement with the first transmission member; or
the output end of the first drive device engages with a second gear disposed on the first transmission member through a first gear, and a width difference between the first gear and the second gear is greater than or equal to an opening degree stroke of the large-opening-degree servo valve.

6. The dual-valve-core servo valve according to claim 2, **characterized in that** the second drive assembly comprises:
a second drive device, wherein the second drive device is fixedly mounted outside the second valve seat; and
a second traction member, wherein the second traction member is sleeved on the first traction member, a first end of the second traction member is in driving engagement with the second drive device, and a second end of the second traction member is disposed in the second valve seat and connected to the first valve seat; and the second traction member, driven by the second drive device, drives the small-opening-degree servo valve to move.

7. The dual-valve-core servo valve according to claim 6, **characterized in that** the second drive device is a motor, and the first valve seat has a non-circular cross-section or is in rotational limiting engagement with the second valve seat;
the second traction member comprises:
a second transmission member, wherein the second transmission member is rotatably mounted on the second valve seat, and a first end of the second transmission member is in gear transmission engagement with the second drive device; and
a second drive rod, wherein a second end of the second transmission member engages with the second drive rod through a first thread or a first lead screw; and an end of the second drive rod away from the second transmission member is fixedly connected to the first valve seat.

8. The dual-valve-core servo valve according to claim 7, **characterized in that** the second transmission member comprises:
a second rotating sleeve, wherein the second rotating sleeve is rotatably mounted on the second valve seat and engages with the second drive rod through a second thread or a second lead screw; and
a second transmission shaft, wherein a first end of the second transmission shaft is fixedly connected to the second rotating sleeve, and a second end of the second transmission shaft is in gear transmission engagement with the second drive device.

9. The dual-valve-core servo valve according to any one of claims 1 to 8, **characterized in that** the inner valve core is sealingly and slidably mounted in a first inner cavity of the first valve seat, and the first valve seat is sealingly and slidably mounted in a second inner cavity of the second valve seat; and
an oil passage communicating with an oil inlet of the first valve seat and the first inner cavity is disposed in the inner valve core; and a first oil port communicating with the second inner cavity is disposed on a side portion of the first inner cavity of the first valve seat.

10. The dual-valve-core servo valve according to claim 1, **characterized in that** an oil inlet of the first valve seat engages with the inner valve core through a first conical surface, and an oil inlet of the second valve seat also engages with the first valve seat through a second conical surface.
